Europäisches Patentamt

European Patent Office

Office européen des brevets

(19)

(11) Veröffentlichungsnummer: **0 240 808**
**B1**

(12) **EUROPÄISCHE PATENTSCHRIFT**

(45) Veröffentlichungstag der Patentschrift:
18.07.90

(51) Int. Cl.⁵: **A01F 15/00, A01F 15/08**

(21) Anmeldenummer: 87104115.8

(22) Anmeldetag: 20.03.87

(54) **Rundballenpresse für landwirtschaftliches Halmgut.**

(30) Priorität: 02.04.86 DE 3610970

(43) Veröffentlichungstag der Anmeldung:
14.10.87 Patentblatt 87/42

(45) Bekanntmachung des Hinweises auf die Patenterteilung:
18.07.90 Patentblatt 90/29

(84) Benannte Vertragsstaaten:
AT BE DE FR GB SE

(56) Entgegenhaltungen:
EP-A- 0 150 630
DE-B- 1 185 049
FR-A- 1 572 650
FR-A- 2 284 276
US-A- 3 399 420
US-A- 4 155 298
US-A- 4 436 027

(73) Patentinhaber: P.J. Zweegers en Zonen
Landbouwmachinefabriek B.V., Nuenenseweg 165,
NL-5667 KP Geldrop(NL)

(72) Erfinder: Berkers, Ansvar, Gebr. de Koning Straat 21,
NL-Heeze(NL)

(74) Vertreter: Patentanwälte Grünecker, Kinkeldey,
Stockmair & Partner, Maximilianstrasse 58,
D-8000 München 22(DE)

## Beschreibung

Die Erfindung betrifft eine Rundballenpresse der im Gattungsbegriff des Patentanspruchs 1 angegebenen Art.

Bei einer aus der Praxis bekannten Rundballenpresse ist die Schiene der Abstreifvorrichtung vor dem Einbau so vorgebogen, daß sie beim Einbau um ca. 2–3 mm konvex zur Walze hin verläuft. Diese Biegung wird durch das das Abstreifmesser an die Walze andrückende Verstellen der zuvor gelockerten Tragplatten mittels der Schwenkverstelleinrichtungen aufgehoben, bis das Abstreifmesser über seine Länge an der Walzenoberfläche anliegt. Damit würde an sich ein gleichmäßiger Anpreßdruck über die Messerlänge erreicht. Nach dieser Einstellung sind jedoch die Tragplatten wieder gegen die Gehäusewände zu spannen. Da der Abstand zwischen den Gehäusewänden und die Länge des Trägers von vornherein so aufeinander abgestimmt sind, daß eine leichte Entnahme des Trägers zum Auswechseln des Messers möglich ist, und weil unvermeidbare Fertigungs- und Montagetoleranzen zu einem Längsspiel von mehreren Millimetern zwischen den Tragplatten und den Gehäusewänden führen, wird die Schiene beim Anpressen der Tragplatten an die Innenseiten der Gehäusewände so gestreckt, daß der Anpreßdruck des Messers im Mittellängsbereich der Walze wieder verringert wird.

Aus der DE-B 1 185 049 ist ein Schaber für eine Papiermaschinenwalze bekannt, dessen Träger der Schaberklinge ein Rohr ist. Zwischen Endplatten des Rohres erstreckt sich ein Zuganker, auf dem in der Rohrmitte eine Spannscheibe exzentrisch angebracht ist. Durch Spannen des Zugankers wird das Rohr über die Spannscheibe gebogen.

Der Erfindung liegt die Aufgabe zugrunde, eine Rundballenpresse der eingangs genannten Art dahingehend zu verbessern, daß der Anpreßdruck des Messers an die Walze unabhängig von Fertigungs- und Montagetoleranzen über die Messerlänge gleichmäßig einstellbar ist.

Die gestellte Aufgabe wird mit den im kennzeichnenden Teil des Patentanspruchs 1 angegebenen Merkmalen gelöst.

Bei eingebautem Träger gestattet es die von außen betätigbare Spannvorrichtung, die Schiene zu biegen, bzw. in die Schiene eine Biegevorspannung einzuleiten. Das Spannglied, das von außen betätigbar ist, wirkt auf die beiden Widerlager ein, die die aufgebrachten Kräfte auf die Schiene übertragen und diese im gewünschten Maß biegen bzw. vorspannen. Wird die Schiene zunächst gebogen, so wird diese Biegung nachfolgend zum Vergleichmäßigen des Anpreßdruckes durch die Betätigung der Schwenkverstelleinrichtungen der Tragplatten bis zur Anlage des Messers über seine gesamte Länge aufgehoben.

Liegt hingegen das Messer bereits an der Walzenoberfläche an, so wird durch die Spannvorrichtung in der Schiene eine Vorspannung erzeugt, durch die das Messer im Mittelbereich der Walze gleich angepreßt wird wie in den Endbereichen. Der besondere Vorteil liegt darin, daß bei eingebauter Abstreifvorrichtung der Anpreßdruck des Messers leicht kontrolliert und von außen nachjustiert werden kann, so daß das gefürchtete Umwickeln der Walze zuverlässig unterbleibt.

Eine zweckmäßige Ausführungsform geht aus Anspruch 2 hervor. Die an beiden Endbereichen der Schiene angeordneten Spannvorrichtungen gestatten das Biegen der Schiene, ohne dabei auf die Lage und Anpressung der Tragplatten an die Gehäuseinnenwände Einfluß zu nehmen.

Fertigungs- oder Montagetoleranzen zwischen der Länge des Trägers und dem Zwischenabstand zwischen den Innenwänden der Gehäusewände, die andernfalls den Anpreßdruck des Messers im Walzenmittelbereich verändern könnten, lassen sich auf diese Weise einfach und nachträglich kompensieren.

Vorteilhaft ist ferner die Ausführungsform von Anspruch 3, weil hierbei das als Druckglied ausgebildete Spannglied zwischen der Tragplatte und der Schiene wirkt und die Schienenendbereiche relativ zu den Tragplatten biegt, wobei auch das Messer in der Schienenmitte vorgespannt wird.

Eine baulich einfache Ausführungsform geht aus Anspruch 4 hervor. Der Bock und die Mutter halten auch unter betriebsbedingten Erschütterungen die Vorspannung der Schiene aufrecht. Trotzdem ist jederzeit eine Nachstellung des Anpreßdruckes möglich. Die in der Mutter abgestützte Druckschraube ist durch Selbsthemmung gegen ungewolltes Lösen gesichert. Es könnten aber auch zusätzliche Drehsicherungen für die Druckschrauben vorgesehen sein.

Ein günstiger Hebelarm für die Biegekräfte ergibt sich bei der Ausführungsform gemäß Anspruch 5, weil die Mutter, in der sich die Druckschraube abstützt, in einem Abstand vor der Tragplatte liegt, so daß die Biegung bzw. Vorspannung der Schiene näher zur Längsmitte aufgebracht wird.

Ein weiterer, besonders wichtiger Gedanke ist in Anspruch 6 enthalten. Die Druckschraube der Spannvorrichtung hat die zusätzliche Funktion der Drehachse der Tragplatte, um die diese mittels der Schwenkverstelleinrichtung verschwenkt wird, wenn das gebogene Messer an die Oberfläche der Walze angepreßt wird. Damit wird eine gesonderte Drehachse für die Tragplatte eingespart.

Da an der Drehachse verhältnismäßig große Kräfte auftreten können und sichergestellt sein muß, daß die Drehachse ihre konstruktiv festgelegte Lage beibehält, ist das Merkmal von Anspruch 7 wichtig. Mit der Platte wird die Flächenbelastung reduziert und einem frühzeitigen Verschleiß oder Ausleiern der Drehachse vorgebeugt.

Bei der Ausführungsform gemäß Anspruch 8, bei der die Tragplatte eine eigene Drehachse besitzt, gestattet der Schlitz in der Gehäusewand das ungehinderte Verstellen der Tragplatte mittels der Schwenkverstelleinrichtung.

Eine alternative Ausführungsform geht aus Anspruch 9 hervor. Beide Widerlager jeder Spannvorrichtung sind auf der Schiene angeordnet, wodurch die Tragplatten von den beim Siegen bzw. Vorspannen der Schiene eingeleiteten Kräften freigehalten werden.

Alternativ ist auch die Ausführungsform zweckmässig, wie sie in Anspruch 10 angegeben ist. Mit einer einzigen Spannvorrichtung wird die Schiene wie ein Bogen gebogen bzw. vorgespannt, dessen Sehne das Spannglied ist. Die Tragplatten sind beim Biegen bzw. Vorspannen von eingeleiteten Kräften freigehalten. Es kann das Spannglied mit wenigstens einem Gewindeabschnitt in eine Gewindebohrung des einen Widerlagers eingreifen und am zweiten Widerlager drehbar axial abgestützt sein. Bei Drehung des Spanngliedes wird das eine Widerlager zum anderen hin gezogen. Das Spannglied könnte aber auch mit Gewindeabschnitten mit gegenläufigen Gewindesteigungen in Gewindebohrungen beider Widerlager eingreifen, wodurch bereits mit kleinen Drehbewegungen des Spanngliedes eine kräftige Biegung bzw. Vorspannung entsteht.

Das Messer läßt sich auf besonders einfache Weise gemäß Anspruch 11 einstellen, da ein von außen beaufschlagbarer hydraulischer oder pneumatischer Arbeitszylinder genau reproduzierbare Hubbewegungen mit großen Kräften auszuführen vermag. Es könnte auch ein Federspeicherzylinder eingesetzt werden, dessen gespeicherte Federkraft durch entsprechendes Entlüften in einstellbarem Maß freigesetzt und zum Anpreisen des Messers genutzt wird. Es wird damit eine gleichmäßige und im Notfall nachgiebige Anpressung des Messers erreicht.

Eine zweckmäßige Ausführungsform geht aus Anspruch 12 hervor. Der eine Schenkel steht in voller Breite zur Auflage des Messers zur Verfügung, ohne daß es mit der Spannvorrichtung kollidiert. Dies begünstigt auch das Auswechseln eines verschlissenen Messers.

Günstig ist ferner die Ausführungsform von Anspruch 13, weil eine sichere Anpressung der Tragplatten an die Innenseiten der Gehäusewände erreicht wird. Die Spannschrauben der Schwenkverstelleinrichtungen können entweder alleine für die Anpressung der Tragplatten sorgen oder im Zusammenspiel mit den Kräften, die beim Biegen bzw. Vorspannen der Schiene durch das Spannglied auf die Tragplatten ausgeübt werden, sofern eine Ausführungsform vorliegt, bei der das Spannglied zwischen der Tragplatte und der Schiene wirksam ist.

Anhand der Zeichnung werden nachstehend Ausführungsformen des Erfindungsgegenstandes erläutert.

Es zeigen:

Fig. 1 eine schematische Seitenansicht einer Rundballenpresse beim Betrieb, wobei bei einer Walze eine Abstreifvorrichtung angedeutet ist,

Fig. 2 eine vergrößerte Detailschnittansicht zu der Abstreifvorrichtung von Fig. 1,

Fig. 3 einen um 90° gedrehten Schnitt in der Ebene III-III von Fig. 2,

Fig. 4 eine Ansicht des Details von Fig. 3 in Blickrichtung eines Pfeiles C,

Fig. 5 eine Schnittansicht der Abstreifvorrichtung bei ihrer Zusammenarbeit mit einer Walze in einer Ebene V-V von Fig. 6,

Fig. 6 eine Ansicht der Abstreifvorrichtung von Fig. 5 in Blickrichtung eines Pfeiles VI, und

Fig. 7a,b,c drei Ausführungsvarianten der Abstreifvorrichtung in schematischer Darstellung.

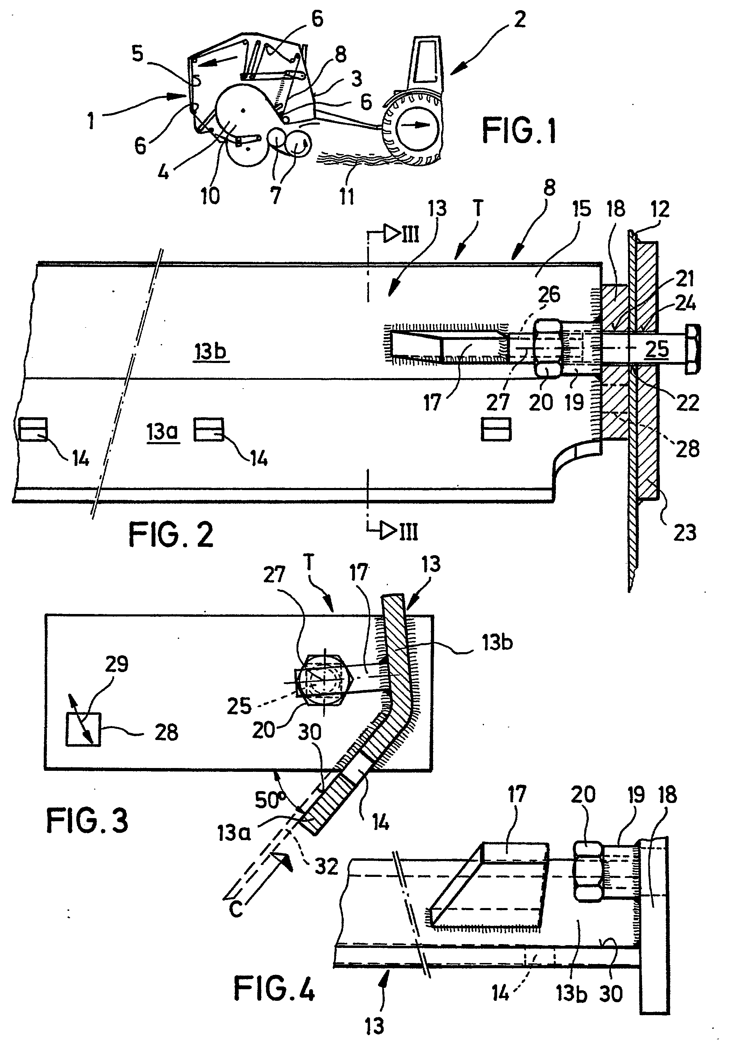

Eine Rundballenpresse 1 zum Verarbeiten landwirtschaftlichen Halmgutes gemäß Fig. 1 wird von einem Schlepper 2 gezogen und besitzt ein auf Rädern abgestütztes Gehäuse 3, in dem eine in der Größe variable Preßkammer 4 enthalten ist. Die Preßkammer 4 wird von einer Vielzahl nebeneinanderliegender Riemen 5 begrenzt, die über Walzen 6 geführt sind, von denen einige angetrieben sein können. Die Riemen 5 werden in einem vorgegebenen Linienzug derart geführt, daß sie durch entsprechende Bewegungen der Walzen 6, die im Querschnitt annähernd kreisförmige Form der Preßkammer 4 begrenzen, die mit Aufnahmewalzen 7 zugeführte Halmgut 11 zu einem allmählich anwachsenden Rundballen 10 verdichtet wird. Bei einigen Halmgutsorten besteht die latente Gefahr, daß das Halmgut zwischen den Riemen 6 hindurch gelangt und die Walzen 6 umschlingt, was zu Betriebsstörungen bzw. Schäden der Rundballenpresse führen kann. Besonders kritisch ist die oberhalb des Einzugsbereichs liegende Walze 6, der deshalb eine Abstreifvorrichtung 8 zugeordnet ist, die eventuell die Riemen 5 passierendes Halmgut sofort von der Walze 6 abstreift. Die Absteifvorrichtung ist dabei zwischen den Gehäusewänden befestigt und läßt sich einfach demontieren bzw. hinsichtlich ihres Anpreßdrucks auf die Walze 6 einstellen.

Aus den Fig. 2, 3 und 4 sind Details der Abstreifvorrichtung 8 von Fig. 1 erkennbar. Zwischen den mit 12 bezeichneten Gehäusewänden des Gehäuses 3 ist ein parallel zur Walze 6 verlaufender Träger T angebracht, der aus einer im Querschnitt winkelförmigen Schiene 13 mit beidendig angeschweißten, viereckigen Tragplatten 18 besteht. An der Oberseite 30 des Schenkels 13a der Schiene 13 ist ein in Fig. 3 gestrichelt angedeutetes, langgestrecktes Federstahl-Messer 32 befestigt, das schräg und entgegengesetzt zur Drehrichtung der Walze 6 gegen deren Oberfläche gepreßt wird. Das Messer 32 ist in Befestigungsöffnungen 14 des Schienenschenkels 13a festgelegt.

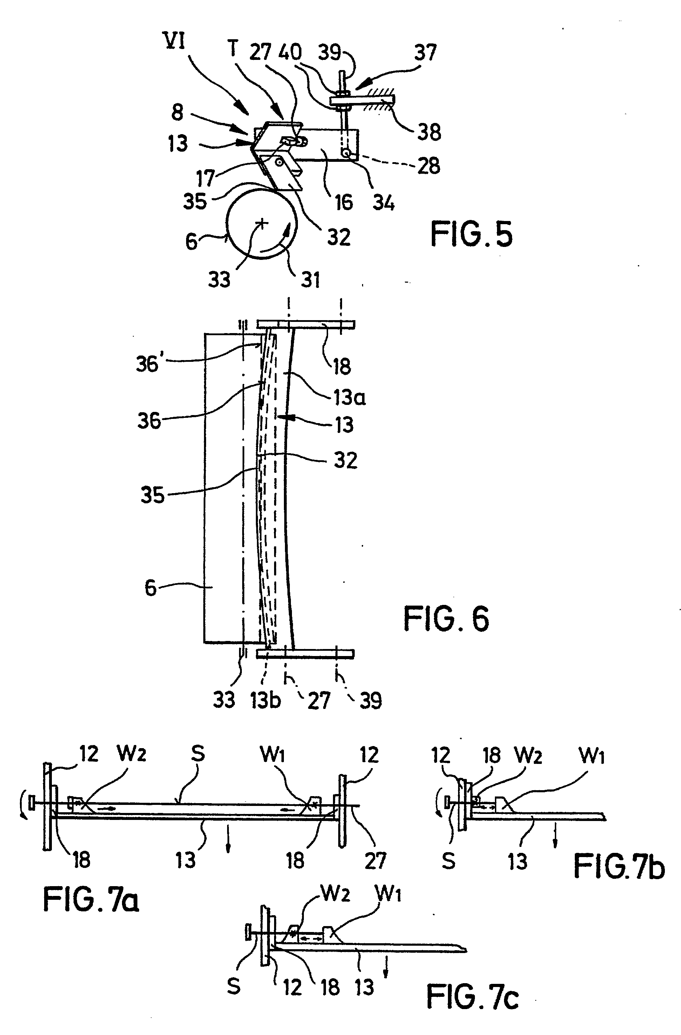

Jede Tragplatte 18 liegt an der Innenseite der Gehäusewand 12 an. In jedem Endbereich 15 der Schiene 13 ist am Schienenschenkel 13b ein erstes Widerlager 17 in Form eines Bockes angeschweißt, das in Längsrichtung der Schiene 13 auf ein zweites Widerlager in Form einer mit einer Distanzhülse 19 an der Tragplatte 18 festgeschweißten Mutter 20 ausgerichtet ist. Fluchtend mit der Gewindebohrung der Mutter 20 ist in der Tragplatte 18 eine Bohrung 21 vorgesehen, die mit Bohrungen 22 in der Gehäusewand 12 und 24 in einer,beispielsweise außen auf diese aufgeschweißten, Verstärkungsplatte 23 fluchtet. Ein Spannglied 25 in Form einer Druckschraube durchsetzt die Bohrungen und ist mit einem vorderen Gewindeabschnitt 26 in der Mutter 20 derart verschraubbar, daß sie mit ihrem freien Ende gegen das erste Widerlager 17 drückt. Der sich zwischen dem Gewindeabschnitt 26 und dem Kopf der Druckschraube erstreckende Schaftabschnitt ist gewindefrei. Die Längsachse der Druckschraube 25 bildet die Drehachse 27 der Tragplatte 18, mit der diese in der Gehäusewand 12 verschwenkbar gelagert ist. In einem Abstand von der Mutter 20 ist in der Tragplatte 18 eine Vierkantöffnung 28 vorgesehen, an die eine in Fig. 5 angedeutete Schwenkverstelleinrichtung 37 angreift und mit der auf die Tragplatte 18 in Richtung eines Doppelpfeiles 29 Schwenkverstellbewegungen übertragbar sind.

Gemäß Fig. 5 besteht die Schwenkverstelleinrichtung 37 aus einem mit dem Gehäuse 3 bzw. der Gehäusewand 12 fest verbundenen Anschlag 38, der von einer Spannschraube 39 durchsetzt wird, die mit Kontermuttern 40 relativ zum Anschlag 38 längsverstellbar ist. Das andere Ende der Spannschraube 39 greift in eine Druckschraube 34 ein, die durch ein Langloch oder einen Schlitz in der Gehäusewand 12 ragt und in die Bohrung 28 der Tragplatte 18 eingreift. In Fig. 5 und 6 ist ferner erkennbar, daß das am Schienenschenkel 13a des Trägers T befestigte Messer 32 über den unteren Rand des Schienenschenkels 13a vorsteht und schräg gegen die Oberfläche der Walze 6 gerichtet ist, die sich um eine Achse 33 mit der Drehrichtung 31 dreht.

Beim Einbau und Einjustieren der Abstreifvorrichtung 8 wird - wie in den Fig. 5 und 6 übertrieben angedeutet - wie folgt vorgegangen:

Zunächst wird der Träger T in das Gehäuse 3 eingesetzt und mittels der Druckschrauben 25 in den Gehäusewänden 12 abgestützt. Das Messer 32 ist am Träger T befestigt. Danach werden die Druckschrauben 34 in die Bohrungen 28 eingeführt und die Schwenkverstelleinrichtungen 37 so weit betätigt, bis die Kante 36 des Messers 32 bei noch gerader Schiene 13 über die Messerlänge auf der Oberfläche der Walze 6 aufliegt. Danach werden die Spannvorrichtungen an beiden Endbereichen 15 betätigt, d.h. es werden die Druckschrauben 25 angezogen, bis sie zunächst gegen die Widerlager 17 drücken und sich die Schiene 13 im Mittelbereich konvex auswölbt und schließlich nur mehr der Mittelbereich des Messers 32 bei 35 auf der Oberfläche der Walze 6 aufliegt. Es stehen dann die Enden des Messers in einem Abstand von 2 - 3 mm von der Oberfläche der Walze 6. Danach werden durch Betätigen der Schwenkverstelleinrichtungen 37 die Tragplatten 18 so weit um die Drehachse 27 verschwenkt (in Fig. 5 im Uhrzeigersinn), bis das Messer 32 mit der Kante 36 über die volle Messerlänge (bei 36' strichliert angedeutet) an der Oberfläche der Walze 6 anliegt. Danach wird mittels einer Fühlerlehre oder einer Messerklinge geprüft, ob sich diese über die gesamte Messerlänge mit gleichem Widerstand zwischen der Oberfläche der Walze 6 und dem Messer 32 hindurchzwängen läßt. Ist der Anpreßdruck im Mittelbereich der Walze 6 fühlbar höher, als in den Endbereichen, werden die Druckschrauben 25 entsprechend gelockert. Ist der Anpreßdruck hingegen im Mittelbereich noch geringer als in den Endbereichen, so werden die Druckschrauben 25 noch stärker angezogen, bis über die gesamte Messerlänge der gleiche Anpreßdruck vorliegt. Ist der Anpreßdruck insgesamt zu hoch, so wird er mittels der Schwenkverstelleinrichtung 37 zurückgenommen.

Der Anpreßdruck des Messers 32 wird bei Betriebspausen gegebenenfalls nachgeprüft und in der vorerwähnten Weise nachgestellt. Durch das Anziehen der Druckschrauben 25 und nachfolgendes Anziehen der Druckschrauben 34 werden die Tragplatten 18 satt an die Innenseite der Gehäusewände 12 angepreßt, so daß der Träger T unverrückbar im Gehäuse 3 festsitzt.

Die Fig. 7a,7b und 7c deuten drei verschiedene Ausführungsformen der Abstreifvorrichtung an. Bei der Ausführungsform gemäß Fig. 7a sind die ersten und zweiten Widerlager W1,W2 der einzigen, vorgesehenen Spannvorrichtung direkt auf der Schiene 13 befestigt. Das Spannglied ist eine lange Zugschraube, die gleichzeitig die Drehachse 27 bildet und an zumindest einem außerhalb der Gehäusewand 12 liegenden Ende einen Kopf trägt. Das Spannglied S greift mit einem Gewinde in das erste Widerlager W1 und ist am zweiten Widerlager W2 entweder mit einem axial wirksamen Bund in Zugrichtung abgestützt oder greift auch dort mit einem gegenläufigen Gewindeabschnitt in ein Gegengewinde des zweiten Widerlagers W2 ein. In den Tragplatten 18 und in den Gehäusewänden 12 hat das Spannglied S keinen Gewindeeingriff. Wird das Spannglied - wie durch einen Pfeil angedeutet - verdreht, so zieht es die Widerlager W1 und W2 gegeneinander, wodurch die Schiene 13 gebogen oder in der vorerwähnten Weise vorgespannt wird.

Bei der Ausführungsform von Fig. 7b, die den Fig. 2 bis 6 entspricht, ist das erste Widerlager W1 auf der Schiene 13 und das zweite Widerlager W2 an der Tragplatte 18 befestigt. Das Spannglied S ist als Druckschraube ausgebildet, die im zweiten Widerlager W2 in einem Gewindeeingriff sitzt und mit dem freien Ende gegen das erste Widerlager W1 drückt, sobald es verschraubt wird. Dabei werden die beiden Widerlager W1 und W2 voneinander weggedrückt, so daß die Tragplatte 18 einerseits an die Innenseite der Gehäusewand angepreßt und die Schiene 13 andererseits gebogen oder vorgespannt wird.

Bei der Ausführungsform gemäß Fig. 7c ist an jedem Endbereich der Schiene 13 eine Spannvorrichtung vorgesehen, bei der die ersten und zweiten Widerlager W1 und W2 unmittelbar auf der Schiene 13 befestigt sind, während das Spannglied die Tragplatte 18 und die Gehäusewand 12 frei durchsetzt. Das Spannglied steht mit dem zweiten Widerlager W2 in einem Gewindeeingriff und drückt mit seinem freien Ende gegen das erste Widerlager W1, so daß es bei Verschrauben die beiden Widerlager W1, W2 voneinander wegdrückt und die Schiene 13 biegt bzw. in Biegerichtung vorspannt.

Anstelle der als Spann-, Zug- oder Druckschrauben ausgebildeten Spannglieder S könnte bei allen dargestellten Ausführungsformen auch ein pneumatischer oder hydraulischer Arbeitszylinder verwendet werden, der von außen mit Druckmittel beaufschlagt wird. Auch ein Federspeicherzylinder wäre denkbar, dessen gespeicherte Federkraft zum Vergleichmäßigen des Anpreßdrucks des Messers an die Oberfläche der Walze im jeweils erforderlichen Maß freigesetzt wird, z.B. durch Entlüften.

Zum Überprüfen des Anpreßdrucks des Messers bei der Einstellung könnte dem Benutzer der Rundballenpresse ein Fühlglied zur Verfügung gestellt werden, das einen Druckaufnehmer enthält und den jeweils abgefühlten Anpreßdruck genau anzeigen kann, so daß der Anpreßdruck des Messers genau auf das jeweils verarbeitete Halmgut abgestimmt werden könnte. Es ist nämlich wichtig, daß der Anpreßdruck nur so hoch gewählt wird, wie es zum Verhindern des Umwickelns erforderlich ist, und nicht höher, weil ein zu hoher Anpreßdruck zu einem starken Verschleiß und zu einer unerwünschten Erwärmung führen würde.

## Patentansprüche

1. Rundballenpresse (1) für landwirtschaftliches Halmgut, mit variabler Preßkammer, die in einem Gehäuse durch wenigstens einen umlaufenden Riemen (5) begrenzt wird, der von mehreren zylindrischen Walzen geführt und/oder angetrieben ist, mit einer wenigstens einer Walze (6) zugeordneten Abstreifvorrichtung (8) aus einem aus einer Schiene (13) mit beidendigen Tragplatten (18) bestehenden, langgestreckten Träger (T) und einem an der Schiene (13) des Trägers (T) befestigten langgestreckten Federstahl-Messer (32), wobei der Träger (T) mit seiner Längsrichtung in etwa parallel zur Walze (6) verläuft, wobei jede Tragplatte (18) um eine zur Längsrichtung des Trägers (T) parallele Drehachse (27) schwenkbar in der benachbarten Gehäusewand (12) gelagert und mittels einer Schwenkberstelleinrichtung (37) um die Drehachse (27) verschwenkbar ist, und wobei die Schiene (13) über die Messerlänge zur Walze (6) hin konvex gebogen ist und das Messer (32) an die Walze anpreßt, dadurch gekennzeichnet, daß zum willkürlichen Biegen der Schiene (13) am Träger (T) wenigstens eine Spannvorrichtung vorgesehen ist, mit der der Mittelbereich der Schiene (13) relativ zu den Endbereichen (15) zur Oberfläche der Walze (31) hin biegbar ist, und daß die Spannvorrichtung zwei in Längsrichtung des Trägers (T) beabstandete Widerlager (W1, W2; 17, 20) enthält, von denen zumindest das erste (17; W1) auf der Schiene (13) befestigt ist, und daß zwischen die Widerlager ein von außerhalb des Gehäuses (3) verstellbares Spannglied (S, 25) eingesetzt ist, das bei einer Verstellung auf die beiden Widerlager im Sinne einer Biegung zumindest des zwischen den Widerlagern liegenden Schienenabschnitts einwirkt.

2. Rundballenpresse nach Anspruch 1, dadurch gekennzeichnet, daß an jedem Endbereich (15) der Schiene (13) eine Spannvorrichtung zwischen der Schiene (13) und jeder Tragplatte (18) vorgesehen ist.

3. Rundballenpresse nach Anspruch 1, dadurch gekennzeichnet, daß das zweite Widerlager (W2; 20) an der Tragplatte (18) befestigt ist, und daß das Spannglied (S, 25) ein Druckglied ist.

4. Rundballenpresse nach einem der Ansprüche 1 bis 3, dadurch gekennzeichnet, daß das erste (W1, 17) Widerlager ein auf der Schiene (13) festgeschweißter Bock und das zweite Widerlager (W2, 20) eine auf der Tragplatte (18) festgeschweißte Mutter ist, und daß das Spannglied (S, 25) eine von außerhalb der Gehäusewand (12) in die Mutter eingeschraubte Druckschraube ist, die mit ihrem freien Ende gegen den Bock andrückbar ist.

5. Rundballenpresse nach Anspruch 4, dadurch gekennzeichnet, daß die Mutter auf einer an der Tragplatte (18) angebrachten Distanzhülse (19) befestigt ist.

6. Rundballenpresse nach einem der Ansprüche 1 bis 5, dadurch gekennzeichnet, daß die Druckschraube die Gehäusewand (12) in einer Durchgangsbohrung (22) durchsetzt und die Drehachse (27) der Tragplatte (18) bildet.

7. Rundballenpresse nach Anspruch 6, dadurch gekennzeichnet, daß die Gehäusewand (12) im Bereich der Durchgangsbohrung (22) durch eine Platte (23) verstärkt ist.

8. Rundballenpresse nach Anspruch 4, dadurch gekennzeichnet, daß für die Druckschraube ein zur Drehachse konzentrischer Schlitz in der Gehäusewand (12) ausgespart ist.

9. Rundballenpresse nach Anspruch 1, dadurch gekennzeichnet, daß das zweite Widerlager (W2) auf der Schiene (13) befestigt ist, und daß jedes Spannglied (S) ein Druckglied ist.

10. Rundballenpresse nach Anspruch 1, dadurch gekennzeichnet, daß beide Widerlager (W1, W2) auf der Schiene (13) befestigt sind, und daß das Spannglied (S) ein Zugglied ist, mit dem zwischen beiden Widerlagern eine Zugkraft erzeugbar ist.

11. Rundballenpresse nach einem der Ansprüche 1 bis 10, dadurch gekennzeichnet, daß das Spannglied (S) ein hydraulischer oder pneumatischer Arbeitszylinder ist.

12. Rundballenpresse nach Anspruch 11, dadurch gekennzeichnet, daß die Schiene (13) im Querschnitt zweischenkelig-winkelförmig ist, und daß die Spannvorrichtung am einen Schenkel (13b) und das Messer (32) am anderen Schenkel (13a) befestigt ist.

13. Rundballenpresse nach einem Ansprüche 1 bis 11, dadurch gekennzeichnet, daß die Tragplatte (18) mittels einer die Schwenkverstelleinrichtung (29) eingegliederten Spannschraube und mittels des Spanngliedes (S) an die Innenseite der Gehäusewand (12) andrückbar ist.

## Revendications

1. Presse à balles rondes (1) pour produits agricoles tels que la paille et le foin, possédant une chambre de pressage variable qui est délimitée dans un carter par au moins une courroie circulante (5) qui est guidée et/ou entraînée par plusieurs rouleaux cylindriques, comprenant un dispositif racleur (8) associé à au moins un rouleau (6) et composé d'un porte-lame de forme allongée (T), composé d'une barre (13) muni de plaques porteuses (18) à ses deux extrémités, et d'une lame en acier à ressorts (32) de forme allongée, fixée à la barre (13) du porte-lame (T), le porte-lame (T) s'étendant avec sa direction longitudinale à peu près parallèlement au rouleau (6), chaque plaque porteuse (18) étant montée pour pivoter dans la paroi adjacente (12) du carter autour d'un axe de rotation (27) parallèle à la direction longitudinale du porte-lame (T), et pouvant pivoter autour de l'axe de rotation (27) sous l'action d'un dispositif de réglage angulaire (37), la barre (13) étant courbée avec une convexité dirigée vers le rouleau (6) sur toute la longueur de la barre et pressant la lame (32) contre le rouleau, caractérisée en ce que, pour courber la barre (13) à volonté, il est prévu sur le porte-lame (T) au moins un dispositif de tension au moyen duquel on peut courber la région centrale de la barre (13) en direction de la surface du rouleau (31), par rapport aux régions d'extrémités (15), et en ce que le dispositif de tension comprend deux butées (W1, W2; 17, 20) situées à distance l'une de l'autre dans la direction longitudinale du porte-lame (2), dont au moins la première (17; 21) est fixée à la barre (13) et en ce que, entre les butées, est intercalé un organe de tension (S5, 25) qui peut être commandé de l'extérieur du carter (3) et qui, lorsqu'on le règle, agit sur les deux butées dans le sens tendant à faire fléchir au moins la partie de la barre qui se trouve entre les butées.

2. Presse à balles rondes selon la revendication 1, caractérisée en ce qu'à chaque région d'extrémité (15) de la barre (13), est prévu un dispositif de tension est interposé entre la barre (13) et la plaque porteuse (18).

3. Presse à balles rondes selon la revendication 1, caractérisée en ce que la deuxième butée (W2; 20) est fixée à la plaque porteuse (18) et en ce que l'organe de tension (S, 25) est un organe de pression.

4. Presse à balles rondes selon une des revendications 1 à 3, caractérisée en ce que la première butée (W1, 17) est une console soudée sur la barre (13) et la deuxième butée (W2, 20) un écrou soudé sur la plaque porteuse (18) et en ce que l'organe de tension (S, 25) est une vis de pression, vissée dans l'écrou en agissant de l'extérieur de la paroi (12) du carter, et qui peut être pressée contre la console par son extrémité libre.

5. Presse à balles rondes selon la revendication 4, caractérisée en ce que l'écrou est fixé sur un manchon entretoise (19) monté sur la plaque porteuse (18).

6. Presse à balles rondes selon une des revendications 1 à 5, caractérisée en ce que la vis de pression traverse la paroi (12) du carter, en passant dans un perçage traversant (22) et forme l'axe de rotation (27) de la plaque porteuse (18).

7. Presse à balles rondes selon la revendication 6, caractérisée en ce que la paroi (12) du carter est renforcée par une plaque (23) dans la région du perçage traversant (22).

8. Presse à balles rondes selon la revendication 4, caractérisée en ce qu'une fente concentrique à l'axe de rotation est ménagée dans la paroi (12) du carter pour recevoir la vis de pression.

9. Presse à balles rondes selon la revendication caractérisée en ce que la deuxième butée (W2) est fixée sur la barre (13) et en ce que chaque organe de tension (S) est un organe de pression.

10. Presse à balles rondes selon la revendication 1, caractérisée en ce que les deux butées (W1, W2) sont fixées sur la barre (13) et en ce que l'organe de tension (S) est un organe de traction à l'aide duquel on peut exercer une force de traction entre les deux butées.

11. Presse à balles rondes selon une des revendications 1 à 10, caractérisée en ce que l'organe de tension (S) est un vérin pneumatique.

12. Presse à balles rondes selon la revendication 11, caractérisée en ce que la barre (13) est d'une forme coudée en section transversale et présente deux ailes et en ce que le dispositif de tension est fixé à une aile (13<u>b</u>) et la lame (32) à l'autre aile (13<u>a</u>).

. 13. Presse a balles rondes selon une des revendications 1 à 11, caractérisée en ce que la plaque porteuse (18) peut être serrée contre la face interne de la paroi (12) du carter à l'aide d'une vis de serrage qui fait partie du dispositif de réglage angulaire (29) et à l'aide de l'organe de tension (S).

## Claims

1. Roll baler (1) for hay or straw with a variable baling chamber which is defined in a housing by at least one rotating belt (5) which is guided and/or driven by a plurality of cylindrical rollers, with a stripping device (8) which is associated with at least one roller (6) and which comprises an elongate carrier (T) comprising a bar (13) with support plates (18) at both ends and an elongate spring steel knife (32) secured to the bar (13) of the carrier (T), the longitudinal direction of the carrier (T) extending approximately parallel to the roller (6), each support plate (18) being mounted in the adjacent housing wall (12) so as to be pivotable about a rotary axis (27) parallel to the longitudinal direction of the carrier (T) and is pivotable about the rotary axis (27) by means of a pivotal adjustment device (37) and the bar (13) being bent convexly over the length of the knife towards the roller (6) and the knife (32) presses against the roller, characterised in that in order to bend the bar (13) on the carrier (T) arbitrarily at least one clamping device is provided with which the central region of the bar (13) may be bent relative to the end regions (15) towards the surface of the roller (6), and that the clamping device includes two abutments (W1, W2; 17, 20) which are spaced apart in the longitudinal direction of the carrier (T) and of which at least the first (17; W1) is secured to the bar (13), and that inserted between the abutments there is a clamping element (S, 25) which is adjustable from outside the housing (3) and which, when adjusted, acts on the two abutments in the sense so as to bend at least the section of the bar lying between the abutments.

2. Roll baler as claimed in claim 1, characterised in that there is a clamping device provided at each end region (15) of the bar (13) between the bar (13) and each support plate (18).

3. Roll baler as claimed in claim 1, characterised in that the second abutment (W2; 20) is secured to the support plate (18) and that the clamping element (S, 25) is a thrust element.

4. Roll baler as claimed in one of claims 1 to 3, characterised in that the first abutment (W1, 17) is a lug rigidly welded to the bar (13) and the second abutment (W2, 20) is a nut rigidly welded to the support plate (18), and that the clamping element (S, 25) is a thrust bolt which is screwed into the nut from outside the housing wall (12) and whose free end may be pressed against the lug.

5. Roll baler as claimed in claim 4, characterised in that the nut is secured to a spacer sleeve (19) mounted on the support plate (18).

6. Roll baler as claimed in one of claims 1 to 5, characterised in that the thrust bolt passes through the housing wall (12) in a through bore (22) and forms the rotary axis (27) of the support plate (18).

7. Roll baler as claimed in claim 6, characterised in that the housing wall (12) is reinforced by a plate (23) in the region of the through bore (22).

8. Roll baler as claimed in claim 4, characterised in that a slit concentric with the rotary axis is provided for the thrust bolt in the housing wall (12).

9. Roll baler as claimed in claim 1, characterised in that the second abutment (W2) is secured to the bar (13) and that each clamping element (S) is a thrust element.

10. Roll baler as claimed in claim 1, characterised in that the two abutments (W1, W2) are secured to the bar (13) and that the clamping element (S) is a tension element with which a tensional force may be produced between the two abutments.

11. Roll baler as claimed in one of claims 1 to 10, characterised in that the clamping element (S) is a hydraulic or pneumatic working cylinder.

12. Roll baler as claimed in claim 11, characterised in that the bar (13) is of two-limbed angular shape in cross-section and that the clamping device is secured to one limb (13b) and the knife (32) to the other limb (13a).

13. Roll baler as claimed in one of claims 1 to 11, characterised in that the support plate (18) may be pressed against the inner surface of the housing wall (12) by means of a clamping bolt incorporated into the pivotal adjustment device (29) and by means of the clamping element (S).

EP 0 240 808 B1

FIG.1

FIG. 2

FIG.3

FIG.4

FIG.5

FIG. 6

FIG.7a

FIG.7b

FIG.7c